# EUROPEAN PATENT SPECIFICATION

(11) **EP 2 728 561 B1**
(45) Date of publication and mention of the grant of the patent: **13.06.2018**
(21) Application number: 12803777.7
(22) Date of filing: 28.06.2012
(51) Int. Cl.: G08B 17/00, G08B 25/00, H04W 4/04, H04W 52/02, H04W 56/00, G08B 29/18

(54) **FIRE ALARM APPARATUS AND FIRE ALARM SYSTEM**
BRANDMELDER UND BRANDMELDEANLAGE
APPAREIL ET SYSTÈME D'ALARME INCENDIE

(30) Priority: 29.06.2011 JP 2011144479
(43) Date of publication of application: 07.05.2014
(73) Proprietor: Panasonic Intellectual Property Management Co., Ltd., Osaka-shi, Osaka 540-6207 (JP)
(72) Inventor: HOSHIBA, Keitaro, Osaka 540-6207 (JP); KURITA, Masanori, Osaka 540-6207 (JP)
(74) Representative: Appelt, Christian W.
(86) International application number: PCT/JP2012/066485
(87) International publication number: WO 2013/002310

(56) References cited:
- EP-A1- 2 360 980
- EP-A2- 1 282 094
- JP-A- 2009 266 058
- JP-A- 2009 288 896
- JP-A- 2009 288 896
- JP-A- 2010 147 868

## Description

### Technical Field

This invention relates to fire alarms and fire alarm systems.

### Background Art

In recent years, as a result of legislation of the obligation for installing fire alarms in residences, a fire alarm system has been provided in which a plurality of fire alarms are controlled to cooperate using wireless signals, from the viewpoint of installability to existing residences.

In this kind of fire alarm system, each of the plurality of fire alarms that are installed at multiple locations has a function for sensing a fire and a function for sounding an alarm. When any of the fire alarms senses a fire, the fire alarm transmits information that notifies that a fire has been sensed (fire sensing information) to the other fire alarms by a wireless signal, along with sounding the alarm.

This enables not only the fire alarm at the fire origin, but also the plurality of fire alarms to sound the alarm at the same time in a cooperative manner, and the occurrence of the fire can be promptly and reliably announced (see Document 1 "JP 2008-4033 A", for example).

This kind of fire alarm is driven by batteries as a power supply to make use of characteristics of sending the fire sensing information by wireless signals, and is usually installed at locations where maintenance (battery change) is difficult to be performed such as the ceiling of a room. Therefore, it is desirable to be able to use the fire alarm for a long period of time, such as several years for example, without maintenance.

Thus, in the conventional example described in Document 1, power consumption is reduced by intermittently operating, at intervals of several seconds, a receiver for wireless signals that is included in each fire alarm, instead of operating the receiver continuously. Furthermore, power consumption is reduced by also operating a fire sensor for sensing a fire intermittently.

Note that, in the technical field of fire alarms, in order to prevent a false alarm from being sounded, in the case of detecting smoke density generated by a fire, for example, a fire is determined to have occurred only when the smoke density continuously exceeds a predetermined threshold a plurality of times (see Document 2 "JP 9-120492 A", for example).

However, in the case where the receiver is driven intermittently to prolong the battery life as described above, in addition to a time lag from the fire breakout to the time when the fire is detected by the fire sensor, a time lag is generated until the fire sensing information is transmitted from the fire alarm at the fire origin to the other fire alarms.

Therefore, a non-negligible amount of time (several tens of seconds, for example) may be required for the plurality of fire alarms to give a fire warning in cooperation.

Thus, the applicant has already proposed a fire alarm system (see Document 3 "JP 2009-288896 A") that is capable of reducing an amount of time required for a plurality of fire alarms to give the fire warning in cooperation, while reducing false alarms in which a fire warning is erroneously given.

In the conventional example described in Document 3, a fire preliminary signal is output when a fire sensing unit of each of the fire alarms determines that a probability of fire occurrence is not less than a first probability, and a fire conclusive signal is output when the fire sensing unit determines that the probability of fire occurrence is not less than a second probability. Note that the second probability is naturally higher than the first probability.

When the fire preliminary signal is output from the fire sensing unit, a wireless signal including an activation message is sent from a wireless sending/receiving unit. Then each of the other fire alarms that have received the activation message puts the wireless sending/receiving unit thereof into a state in which signals are receivable at any time without sounding the alarm.

Therefore, a wireless signal including a fire warning message is sent when the probability of fire occurrence is high (when the probability is not less than the second probability), and the other fire alarms can receive the wireless signal immediately. Thus, it is possible to shorten the time necessary for the plurality of fire alarms to cooperate to give the fire warning after the fire is sensed.

Incidentally, in the conventional example described in Document 3, in order to make the other fire alarms, which are each randomly performing intermittent signal reception, receive the wireless signal including the activation message, the fire alarm at the fire origin must repeatedly send the wireless signals during a period that is not less than the intermittent reception interval, for example. On the other hand, in Article 49-17 "wireless facility of wireless station in low power security system" of the wireless facility regulation in the Ordinance for Enforcement of the Radio Act, it is stipulated that a period in which a wireless signal can be sent continuously (sending period) is not more than three seconds (see Article 49, item 5). Therefore, in a case where the intermittent reception interval is longer than three seconds, since the wireless signal cannot be sent continuously during the intermittent reception interval, the time required until the wireless signal including the activation message is received by all the other fire alarms cannot be shortened. As a result, sending and receiving of the wireless signal including the fire conclusive signal may be affected, and it becomes difficult to shorten a time required for the plurality of fire alarms to give the fire warning in cooperation. Meanwhile, if the intermittent reception interval is shortened in order to reduce the time necessary for the plurality of fire alarms to give the fire warning in cooperation, battery life is shortened.

EP 2 360 980 A1 describes a wireless communication system including a plurality of wireless terminals each implementing a fire alarm. A first of the wireless terminals acts as a master, and the remaining terminals each act as a slave. When the master transmits a synchronization signal, each of the wireless terminals receiving the synchronization signal performs a synchronization processing. When the fire sensor of a wireless terminal detects a fire, the terminal transmits a fire notification signal during synchronized transmission period. The master re-sends the fire alarm message, and all wireless terminals perform the intermittent reception at a timing approximately identical to each other. Consequently, all wireless terminals receive the fire alarm message on short notice.

EP 1 282 094 A2 describes a fire alarm system and a method of wireless signal transmission therein. The method involves switching on receivers cyclically at defined time points. A substation intending to send transmits a preamble, wherein the preamble contains only the starting time of the intended data message. A receiver switches off if there is no preamble. If there is a preamble intended for the receiver, the receiver remains on until the end of the preamble. The receiver switches off after receiving the starting time and switches on again at this time.

### Summary

The present invention has been made in view of the above-described problems, and an object of the present invention is to achieve both shortening of a time necessary for a plurality of fire alarms to give fire warning in cooperation and extending battery life.

In accordance with the first aspect of the present disclosure, a fire alarm includes: an alarm for providing fire warning; a receiver for receiving a wireless signal; and a controller configured to control the alarm and the receiver. The controller is configured to, upon acknowledging that the wireless signal received via the receiver is a warning signal, provide the fire warning by use of the alarm. The controller is configured to: upon determining that the wireless signal received via the receiver is a prior notice signal, calculate a cooperation waiting period including a sending time at which the warning signal is sent; and deactivate the receiver until the cooperation waiting period starts and activate the receiver throughout the cooperation waiting period.

In accordance with the second aspect of the present disclosure, in addition to the first aspect, the prior notice signal is a wireless signal which is sent when it is determined based on a predetermined physical amount that a fire occurrence probability is not less than a first probability. The warning signal is a wireless signal which is sent when it is determined based on the predetermined physical amount that the fire occurrence probability is not less than a second probability higher than the first probability.

In accordance with the third aspect of the present disclosure, in addition to the second aspect, the fire alarm further includes: a fire sensor; and a sender for sending a wireless signal. The fire sensor is configured to determine based on the predetermined physical amount whether the fire occurrence probability is not less than the first probability or the second probability, and output a fire preliminary signal to the controller upon determining that the fire occurrence probability is not less than the first probability, and output a fire conclusive signal to the controller upon determining that the fire occurrence probability is not less than the second probability. The controller is configured to send the prior notice signal via the sender upon receiving the fire preliminary signal from the fire sensor, and provide the fire warning by use of the alarm and send the warning signal via the sender upon receiving the fire conclusive signal from the fire sensor. The controller is configured to, upon determining that the wireless signal received via the receiver is the prior notice signal, calculate the sending time at which the warning signal is sent, and deactivate the sender and the receiver until the cooperation waiting period including the sending time starts and activate the receiver throughout the cooperation waiting period.

In accordance with the fourth aspect of the present disclosure, in addition to the third aspect, the controller is configured to, until receiving the prior notice signal via the receiver, operate the receiver intermittently by activating the receiver at intermittent reception intervals. The controller is configured to, upon receiving the fire preliminary signal from the fire sensor, start to send the prior notice signal via the sender at an ending time of the present intermittent reception interval.

In accordance with the fifth aspect of the present disclosure, in addition to the fourth aspect, the controller is configured to, upon determining that the wireless signal received via the receiver is a synchronization signal, select a time after a lapse of a predetermined waiting period from a synchronization time given by the synchronization signal, as a starting time for the next intermittent reception interval.

In accordance with the sixth aspect of the present disclosure, in addition to any one of the first to fifth aspects, the controller is configured to operate the receiver continuously throughout the cooperation waiting period.

In accordance with the seventh aspect of the present disclosure, in addition to any one of the first to fifth aspects, the controller is configured to operate the receiver intermittently by activating the receiver at intervals shorter than the intermittent reception intervals throughout the cooperation waiting period.

In accordance with the eighth aspect of the present disclosure, in addition to any one of the first to seventh aspects, the controller is configured to select, as a starting time of the cooperation waiting period, a time prior to the sending time.

In accordance with the ninth aspect of the present disclosure, in addition to any one of the first to seventh aspects, the controller is configured to select, as a starting time of the cooperation waiting period, the same time as the sending time.

In accordance with the tenth aspect of the present disclosure, in addition to any one of the third to fifth aspects, the controller is configured not to send a wireless signal via the sender at the sending time.

In accordance with the eleventh aspect of the present disclosure, in addition to the third aspect, the controller is configured to, until receiving the prior notice signal via the receiver, operate the receiver intermittently by activating the receiver at first intermittent reception intervals. The controller is configured to select, as a first waiting period, one of a plurality of waiting periods different from each other. The controller is configured to, upon determining that the wireless signal received via the receiver is a synchronization signal, select, as a starting time of the next first intermittent reception interval, a time after a lapse of the first waiting period from a synchronization time given by the synchronization signal, and select, as a starting time of a next second intermittent reception interval, a time after a lapse of a second waiting period out of the remaining waiting periods from the synchronization time. The controller is configured to, upon receiving the fire preliminary signal from the fire sensor, start to send the prior notice signal via the sender at each of an ending time of the present first intermittent reception interval and an ending time of the present second intermittent reception interval.

In accordance with the twelfth aspect of the present disclosure, a fire alarm system includes a plurality of fire alarms according to any one of the third to eleventh aspects.

In accordance with the thirteenth aspect of the present disclosure, in addition to the twelfth aspect, the plurality of fire alarms include a first fire alarm and a plurality of second fire alarms. The controller of the first fire alarm is configured to, upon receiving the prior notice signal via the receiver, send a synchronization beacon via the sender at predetermined intervals. The synchronization beacon is a wireless signal for defining a plurality of time slots respectively allocated to the plurality of second fire alarms. Each of the controllers of the respective second fire alarms is configured to, upon receiving the synchronization beacon via the receiver, send the warning signal via the sender during a period determined by the time slot allocated to the corresponding second fire alarm and operate the receiver throughout a period determined by the time slot not allocated to the corresponding second fire alarm.

In accordance with the fourteenth aspect of the present disclosure, in addition to the twelfth aspect, each controller is configured to, upon receiving the warning signal via the receiver, send the received warning signal via the sender during a receiving period when the receiver of another fire alarm is in operation. Each controller is configured to, upon receiving the fire conclusive signal from the fire sensor, send the warning signal via the sender before the receiving period.

### Brief Description of the Drawings

**FIG. 1** is a time chart illustrating operation of a fire alarm system of the first embodiment;
**FIG. 2** is a block diagram illustrating a fire alarm used in the fire alarm system of the first embodiment;
**FIG. 3** is a block diagram of a fire sensing unit of the fire alarm;
**FIG. 4** is a time chart illustrating operation of a fire alarm system of the second embodiment; and
**FIG. 5** is a time chart illustrating operation of a fire alarm system of the third embodiment.

### Description of Embodiments

The present invention relates to a fire alarm and a fire alarm system. Specifically, the present invention relates to a fire alarm that gives a fire warning in cooperation with other fire alarms by sending/receiving wireless signals to/from the other fire alarms and a fire alarm system that includes a plurality of the fire alarms.

Hereinafter, embodiments of the fire alarm and the fire alarm system according to the present invention will be described in detail, with reference to the drawings.

### (Embodiment 1)

The fire alarm system of the present embodiment includes a plurality of fire alarms **TR.** In other words, a plurality of fire alarms **TR** constitute the fire alarm system.

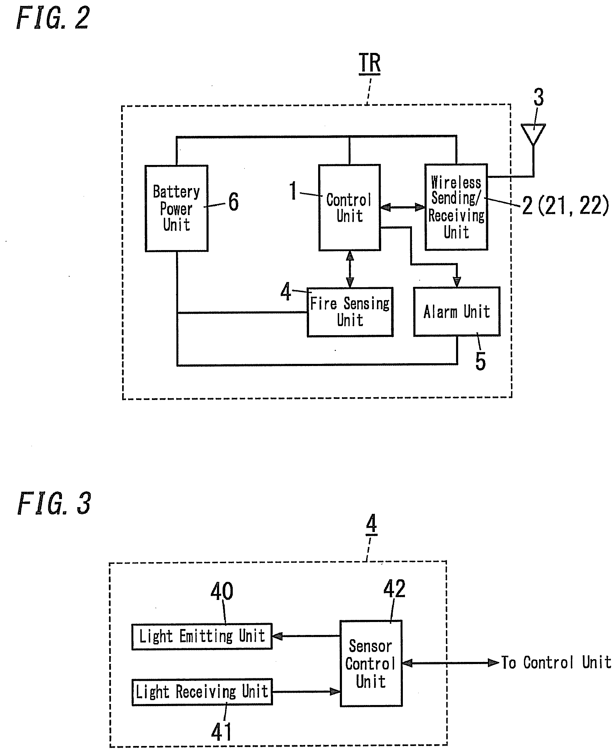

The fire alarm **TR** includes, as shown in **FIG. 2****,** a control unit (controller) **1,** a wireless sending/receiving unit **2,** an antenna **3,** a fire sensing unit (fire sensor) **4,** an alarm unit (alarm) **5,** a battery power unit **6,** and the like. In other words, the fire alarm system includes a plurality of fire alarms **TR.**

The wireless sending/receiving unit **2** sends/receives wireless signals via the antenna **3** using a radio wave as a medium, in compliance with " security radio equipment for low power radio station" stipulated in Article 6, paragraph 4, item 3 of regulations of enforcement of the Japanese Radio Act.

The wireless sending/receiving unit **2** includes a receiver (receiving unit) **21** for receiving wireless signals and a sender (sending unit) **22** for sending wireless signals. The wireless sending/receiving unit **2** has two operation states that are a receiving state in which the receiving unit **21** is activated and the sending unit **22** is deactivated and a sending state in which the sending unit **22** is activated and the receiving unit **21** is deactivated.

The alarm unit **5** gives (sounds a speaker) fire warning (hereinafter referred to as "alarm") by sound (buzzer sound, voice message, or the like).

The control unit **1** is constituted by hardware such as a microcomputer, a memory, and a timer, and software such as a program executed by the microcomputer, and controls the wireless sending/receiving unit **2,** the fire sensing unit **4,** the alarm unit **5,** and the like.

The battery power unit **6** supplies operation power to the units from a battery such as a dry-cell battery as a power supply. For example, the battery power unit **6** is configured to be connected to a battery (not shown). The battery power unit **6** supplies electric power from the connected battery to electric circuits. The electric circuits include the control unit **1,** the wireless sending/receiving unit **2,** the fire sensing unit **4,** and the alarm unit **5,** for example. Thus the fire alarm **TR** of the present embodiment is a battery-powered fire alarm.

Note that unique identification codes are assigned to the fire alarms **TR,** and the fire alarm **TR** which is a destination of the wireless signal and the fire alarm **TR** which is a sender of the wireless signal can be identified by use of the identification codes.

The fire sensing unit **4** is configured to determine whether a fire occurrence probability is not less than a first probability or a second probability based on a predetermined physical amount (smoke density, for example). The fire sensing unit **4** is configured to, upon determining that the fire occurrence probability is not less than the first probability, output a fire preliminary signal **S2** to the control unit **1.** The fire sensing unit **4** is configured to output, upon determining that the fire occurrence probability is not less than the second probability, a fire conclusive signal **S4** to the control unit **1.**

The fire sensing unit **4** senses a fire by detecting smoke density among observables that occur with the fire. The fire sensing unit **4** includes, as shown in **FIG. 3****,** a light-emitting unit **40,** a light-receiving unit **41,** and a sensor control unit **42.**

The light-emitting unit **40** is constituted by a light-emitting diode (not shown), a driving circuit for controlling the light-emitting diode to emit light, and the like. The light-emitting unit **40** emits light to a space where smoke (i.e., matter that is likely to be generated accompanied by fire) generated accompanied by the fire is introduced.

The sensor control unit **42** controls the light-emitting unit **40** to emit light intermittently, and determines a probability of fire occurrence based on light intensity received by the light-receiving unit **41.**

The sensor control unit **42** determines the probability of fire occurrence (fire occurrence probability) stepwise based on an output signal level (voltage level) of the light-receiving unit **41** according to the received light intensity, that is, the smoke density in the space. Then, the sensor control unit **42** outputs, upon determining that the probability is not less than the first probability, to the control unit **1** the fire preliminary signal **S2,** and outputs the fire conclusive signal **S4** upon determining that the probability is not less than the second probability that is higher than the first probability to the control unit **1.**

For example, the sensor control unit **42** determines that the fire occurrence probability is not less than the first probability when the smoke density (output signal level of light-receiving unit **41**) exceeds a predetermined threshold. The sensor control unit **42** determines that the fire occurrence probability is not less than the second probability when a period in which the smoke density exceeds the threshold continuously is not less than a predetermined determination period (ten and several seconds, for example).

Alternatively, the sensor control unit **42** may determine that the fire occurrence probability is not less than the first probability when the smoke density exceeds the threshold. The sensor control unit **42** may determine that the fire occurrence probability is not less than the second probability when a rate or the number of times of the smoke density having exceeded the threshold in a predetermined period (ten and several seconds, for example) exceeds a rate or the number of times of the smoke density having not exceeded the threshold in the period.

Alternatively, the sensor control unit **42** may determine that the fire occurrence probability is not less than the first probability when the smoke density exceeds a first threshold. The sensor control unit **42** may determine that the fire occurrence probability is not less than the second probability when the smoke density exceeds a second threshold that is higher than the first threshold.

Meanwhile, the sensor control unit **42,** in order to reduce the power consumption and extend the battery life, causes the light-emitting unit **40** and the light-receiving unit **41** to function intermittently at a cycle of several seconds (ten seconds, for example), and shortens the cycle (cycle of three seconds, for example) when it determines that the fire occurrence probability is not less than the first probability.

However, although a case where the fire sensing unit **4** detects smoke density as an observable that is generated accompanied by fire is exemplified in the present embodiment, it is not limited thereto, and heat may be detected as another observable that is generated accompanied by fire.

The control unit **1** gives the fire warning by sounding an alarm from the alarm unit **5** when the fire sensing unit **4** outputs the fire conclusive signal **S4,** and controls the wireless sending/receiving unit **2** to send a wireless signal (alarm signal) **S5** including a fire warning message such that the other fire alarms **TR** also give the fire warning. Therefore, the alarm signal **S5** is a wireless signal that is sent when the fire occurrence probability is determined to be not less than the second probability that is higher than the first probability based on a predetermined physical amount (smoke density, for example).

The control unit **1** also controls the alarm unit **5** to sound the alarm upon receiving the fire warning message as a result of receiving by the wireless sending/receiving unit **2** the wireless signal sent from the other fire alarm **TR.**

Meanwhile, the control unit **1** repeatedly times a predetermined intermittent reception interval with a timer embedded in the microcomputer. Every time the timing the intermittent reception interval is completed, the control unit **1** activates the wireless sending/receiving unit **2** to check whether or not an intended radio wave (wireless signal sent by other fire alarm TR**)** can be received.

Then, when the radio wave cannot be captured, the control unit **1** deactivates the wireless sending/receiving unit **2** immediately to be in a stand-by state to greatly reduce the average power consumption.

Note that the radio wave reception check is performed by the control unit **1** based on a receiving signal strength display signal (Receiving Signal Strength Indication: RSSI signal) that is a DC voltage signal proportional to the magnitude of strength of the received signal, which is output from the wireless sending/receiving unit **2.** However, detailed description thereof will be omitted since it is conventionally known.

Further, in the present embodiment, similar to the conventional example described in Document 3, when the fire preliminary signal **S2** is output from the fire sensing unit **4,** the control unit **1** controls the wireless sending/receiving unit **2** to send a wireless signal (prior notice signal) **S3** that includes an activation message rather than the fire warning message. That is, the prior notice signal **S3** is a wireless signal that is sent when the fire occurrence probability is determined to be not less than the first probability based on a predetermined physical amount (smoke density, for example).

The control unit **1** of the other fire alarm **TR** that has received the activation message activates the wireless sending/receiving unit **2** during a cooperation waiting period W that includes a timing when the wireless signal **S5** that includes the fire warning message is to be sent, without sounding the alarm from the alarm unit **5.**

Then, the control unit **1,** when the fire sensing unit **4** outputs the fire conclusive signal **S4** in the fire alarm **TR** (at a fire origin) that has sent the activation message, gives the fire warning by sounding the alarm from the alarm unit **5,** and furthermore controls the wireless sending/receiving unit **2** to send the wireless signal **S5** that includes the fire warning message.

Since this timing is within the cooperation waiting period **W** as described later, the other fire alarm **TR** (not at the fire origin) can immediately receive the wireless signal (wireless signal including fire warning message) **S5** which has been sent subsequently. Then, the control unit **1** of the other fire alarm **TR** that has received the fire warning message gives the fire warning by controlling the alarm unit **5** to sound the alarm. Consequently, the time until fire cooperation can be shortened.

Incidentally, since timings when a plurality of fire alarms **TR** start operation (timer starts to time the intermittent reception interval) usually do not coincide, timings when the control units **1** activate the wireless sending/receiving units **2** to receive the radio wave do not coincide.

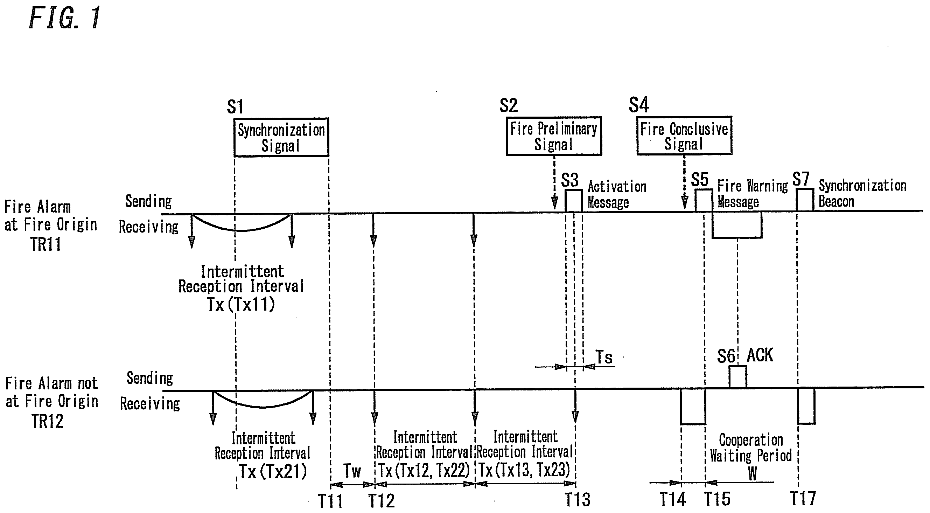

In contrast, in the present embodiment, when a synchronization signal **S1** is received, as shown in **FIG. 1****,** the control unit **1** of each of the fire alarms **TR** (**TR11** and **TR12**) stops timing the intermittent reception interval **Tx** by the timer, and restarts timing of the intermittent reception interval **Tx** (**Tx12** and **Tx22; Tx13** and **Tx23**) at a point of time when a given waiting period **Tw** has elapsed (time **T12**) since the end of the synchronization signal **S1** (time **T11**).

Therefore, when the synchronization signal **S1** is received, the timings when the timers of the fire alarms **TR11** and **TR12** complete timing the intermittent reception intervals **Tx** (**Tx12** and **Tx22; Tx13** and **Tx23**) coincide.

Note that, the synchronization signal **S1** may be sent from a dedicated sending station (not shown), or may be sent from an arbitrary fire alarm **TR.** When the synchronization signal **S1** is sent from the dedicated sending station, there is an advantage that battery consumption of the fire alarm **TR** can be reduced compared with the case where the synchronization signal **S1** is sent from a fire alarm **TR.**

As shown in **FIG. 1****,** the control unit **1** of the fire alarm **TR** (**TR11**) at the fire origin activates the wireless sending/receiving unit **2** before completion of the timing of the intermittent reception interval **Tx** by the timer, and controls it to send the wireless signal (prior notice signal) **S3** including the activation message during a sending period **Ts** that includes the end point of the timing (time **T13**).

On the other hand, the fire alarm **TR** (**TR12**) that is not at the fire origin can, as soon as the control unit **1** activates the wireless sending/receiving unit **2** at the completion of the timing of the intermittent reception interval **Tx** by the timer (time **T13**), receive the wireless signal **S3** including the activation message (see **FIG. 1**).

That is to say, since the timings when a plurality of fire alarms **TR** (**TR11** and **TR12**) complete the timing of the intermittent reception interval **Tx** coincide (time **T13,** for example) and the wireless signal **S3** including the activation message can be received in one sending period **Ts,** it is possible to reduce battery consumption and shorten delay time between sending and receiving the activation message.

Meanwhile, the control unit **1** that has received the activation message (control unit **1** of the fire alarm **TR** (**TR12**) that is not at the fire origin) activates the wireless sending/receiving unit (receiver) **2** in the cooperation waiting period **W** that includes the timing (time **T15**) when the wireless signal (alarm signal) **S5** including the fire warning message is to be sent.

The cooperation waiting period **W** may start at a time (time **T13**) when reception of the wireless signal **S3** including the activation message is completed, or may start at a timing (time **T14**) which is earlier by a predetermined period than the timing when the wireless signal **S5** including the fire warning message is to be sent (time **T15**).

In a case where the cooperation waiting period **W** starts at the time (time **T13**) when reception of the wireless signal **S3** including the activation message is completed, the control unit **1** may put the wireless sending/receiving unit **2** in a continuous receiving state throughout the cooperation waiting period **W,** or may activate the wireless sending/receiving unit **2** intermittently at a cycle that is sufficiently shorter than the intermittent reception interval **Tx.**

Here, the timings when timing of the intermittent reception interval **Tx** is completed coincide in all the fire alarms **TR,** and the cycle at which the fire sensing units **4** operate intermittently are the same.

Therefore, the control unit **1** of the fire alarm **TR** (**TR12**) that is not at the fire origin can estimate the timing (time **T15**) when the wireless signal **S5** including the fire warning message is to be sent from the fire alarm **TR** (TR**1**1) at the fire origin based on the timing (time **T13**) of receiving the activation message and the cycle at which the fire sensing unit **4** operates intermittently.

Therefore, the control unit 1 of the fire alarm **TR** (**TR12**) that is not at the fire origin does not necessarily start the cooperation waiting period **W** from the time (time **T13**) when reception of the wireless signal **S3** including the activation message is completed. Hence, it is sufficient that the control unit **1** of the fire alarm **TR** (**TR12**) that is not at the fire origin starts the cooperation waiting period **W** in accordance with the timing (time **T15**) at which the wireless signal **S5** including the fire warning message is to be sent (see **FIG. 1**).

However, in a case where the wireless signal **S5** including the fire warning message is not sent from the fire alarm **TR** (**TR11**) at the fire origin, the control unit **1** of the fire alarm **TR** (**TR12**) that is not at the fire origin ends the cooperation waiting period after the timing (time **T15**) when the wireless signal **S4** including the fire warning message is to be sent, and controls the fire alarm to return to the normal intermittent receiving state.

The control unit **1** usually performs intermittent receiving processing. The control unit **1** allows the receiving unit **21** to operate intermittently by activating the receiving unit **21** at the intermittent reception intervals **Tx** in the intermittent receiving processing.

Upon receiving the prior notice signal **S3,** the control unit 1 ends the intermittent receiving processing and starts cooperated waiting processing. The control unit **1,** in the cooperated waiting processing, calculates the cooperation waiting period **W** that includes the sending time (**T15**) when the alarm signal **S5** is to be sent, deactivates the wireless sending/receiving unit (the receiving unit **21** and the sending unit **22**) **2** until the cooperation waiting period **W** starts, and controls the receiving unit **21** to operate throughout the cooperation waiting period **W.**

Upon failing to receive the alarm signal **S5** during the cooperation waiting period in the cooperation waiting processing, the control unit **1** ends the cooperation waiting processing and starts the intermittent receiving processing.

Alternatively, in the case where the wireless signal **S5** including the fire warning message is not sent from the fire alarm **TR** (**TR11**) at the fire origin, the control unit **1** of the fire alarm **TR** (**TR11**) that is not at the fire origin may time out the present processing after waiting for a certain period of time which is preliminarily determined in consideration of re-sending time of the wireless signal **S5** including the fire warning message, and controls the fire alarm to return to the normal intermittent receiving state.

Then, the control unit **1** of the fire alarm **TR** (**TR12**) that is not at the fire origin sounds the alarm from the alarm unit **5** as soon as it receives the fire warning message, and sends back, via the wireless sending/receiving unit **2,** an acknowledging message (ACK) **S6** which is a wireless signal for enabling confirmation of reception of the fire warning message.

Upon receiving the ACKs **S6** from all of the fire alarms TR (**TR12**) that are not at the fire origin, the control unit **1** of the fire alarm **TR** (**TR11**) at the fire origin controls the wireless sending/receiving unit **2** to send a synchronization beacon **S7** to define time slots at a constant cycle.

However, in consideration of a case where a plurality of fire alarms **TR** (**TR12**) that are not at the fire origin exist, it is preferable not to control the wireless sending/receiving unit **2** to send a wireless signal (wireless signal **S3** including activation message, for example) at the estimated timing (timing when wireless signal **S5** including fire warning message is to be sent) (time **T15**).

When all the fire alarms **TR** sound the alarm and thus fire cooperation starts as described above, the synchronization beacon **S7** is sent from the fire alarm **TR** (**TR11**) at the fire origin at a constant cycle, and synchronous communication with the TDMA system starts. Then, the control unit **1** of the fire alarm TR (**TR11**) at the fire origin controls the wireless sending/receiving unit **2** to repeatedly send the fire warning message at the constant cycle to all the other fire alarms **TR** (**TR12**) by including the fire warning message in the synchronization beacon **S7.**

Then, every time receiving the fire warning message sent from the fire alarm **TR** (**TR11**) at the fire origin, the control unit **1** of each fire alarm **TR** (**TR12**) confirms the state of the alarm unit **5,** and controls the alarm unit **5** to sound the alarm again if the alarm unit **5** has stopped operating.

Therefore, by assigning all the fire alarms **TR** (**TR12**) that are not at the fire origin to a plurality of time slots that are defined by the synchronization beacon **S7** sent from the fire alarm **TR** (**TR11**) at the fire origin and performing wireless communication with Time Division Multiple Access (TDMA), collision can be avoided.

Furthermore, by sending the fire warning message that is included in the synchronization beacon **S7** cyclically from the fire alarm **TR** (**TR11**) at the fire origin to the fire alarms **TR** (**TR12**) that are not at the fire origin, it is possible to successfully give the fire alarm. As a result, a plurality of fire alarms **TR** can be effectively made to cooperate while avoiding collision of the wireless signals.

As described above, the fire alarm **TR** of the present embodiment includes: the fire sensing unit (fire sensor) **4** configured to determine the probability of fire occurrence stepwise based on an observable that changes with a fire and output the fire preliminary signal **S2** upon determining that the probability is not less than the first probability and output the fire conclusive signal **S4** upon determining that the probability is not less than the second probability that is higher than the first probability; the alarm unit (alarm) **5** configured to give the fire warning; the wireless sending/receiving unit (sender) **2** configured to send the wireless signal; the wireless sending/receiving unit (receiver) **2** configured to receive the wireless signal; and the control unit (timer) **1** that clocks time. The fire alarm **TR** sends/receives the wireless signal with the radio wave as a medium with another fire alarm **TR.** The fire alarm **TR** that has received the wireless signal **S3** resulting from the fire preliminary signal **S2** knows in advance the delay time until the wireless signal **S5** resulting from the fire conclusive signal **S4** will arrive, clocks the delay time with the timer, and deactivates the sending operation in the wireless sending/receiving unit (sender) **2** and the receiving operation in the wireless sending/receiving unit (sender) **2** until the clocking is completed.

Specifically, in the fire alarm **TR** of the present embodiment, the timer is configured to time the constant intermittent reception intervals **Tx** repeatedly. The fire alarm **TR** includes the controller (control unit) 1 and the battery for power supply. The controller (control unit) **1** is configured to deactivate the receiver (wireless sending/receiving unit) **2** during the timing of the intermittent reception interval **Tx** by the timer, and activate the receiver (wireless sending/receiving unit) **2** every time the timing of the intermittent reception interval **Tx** by the timer is completed, and stop the timing of the intermittent reception interval **Tx** by the timer when the synchronization signal **S1** is received by the receiver (wireless sending/receiving unit) **2,** and restart the timing of the intermittent reception interval **Tx** by the timer when the certain waiting period **Tw** has elapsed (time **T12**) from the end of the synchronization signal **S1** (time **T11**). The controller **1** is configured to control the sender (wireless sending/receiving unit) **2** to send, when the fire preliminary signal **S2** is output from the fire sensor (fire sensing unit) **4,** the wireless signal **S3** including the activation message at the timing when the timing of the intermittent reception interval **Tx** by the timer is completed. The controller **1** is configured to control the alarm (alarm unit) **5** to give the fire warning and the sender (wireless sending/receiving unit) **2** to send the wireless signal **S5** including the fire warning message, when the fire conclusive signal **S4** is output from the fire sensor **4.** The controller **1** is configured to, upon receiving the wireless signal sent from the other fire alarm **TR** via the receiver (wireless sending/receiving unit) **2** and obtaining the fire warning message from the received wireless signal, control the alarm **5** to give the fire warning. The controller **1** is configured to, upon receiving the wireless signal sent from the other fire alarm **TR** via the receiver (wireless sending/receiving unit) **2** and obtaining the activation message from the received wireless signal, activate the receiver (wireless sending/receiving unit) **2** throughout the cooperation waiting period **W** that includes the timing (time **T15**) when the wireless signal **S5** including the fire warning message is to be sent from the other fire alarm **TR.**

In other words, the fire alarm **TR** of the present embodiment includes: the alarming unit (alarm) **5** for providing fire warning; the receiver (receiving unit) **21** for receiving a wireless signal; and the controller (control unit) **1** configured to control the alarm **5** and the receiver **21.** The controller **1** is configured to, upon acknowledging that the wireless signal received via the receiver **21** is the warning signal S5, provide the fire warning by use of the alarm **5.** The controller 1 is configured to: upon determining that the wireless signal received via the receiver **21** is the prior notice signal **S3,** calculate the cooperation waiting period **W** including the sending time at which the warning signal **S5** is sent; and deactivate the receiver **21** until the cooperation waiting period **W** starts and activate the receiver **21** throughout the cooperation waiting period **W.**

Note that the controller **1** calculates the sending time (**T15**) based on the time **T13** when the controller **1** has received the prior notice signal **S3,** for example. As an example, the controller **1** calculates the sending time **T15** based on the time **T13** when the controller **1** has received the prior notice signal **S3** and the cycle of the intermittent operation of the fire sensing unit **4.**

Alternatively, the controller **1** may calculate the sending time **T15** from the time **T13** when the controller **1** has received the prior notice signal **S3** based on the correlative relationship between the time when the prior notice signal **S3** is sent and the time when the alarm signal **S5** is sent. For example, the controller **1** may select, as the sending time **T15,** time after a lapse of a predetermined time from the time **T13** when the controller **1** has received the prior notice signal **S3.** The predetermined time is determined based on the correlative relationship between the time when the prior notice signal **S3** is sent and the time when the alarm signal **S5** is sent.

Further, in the fire alarm **TR** of the present embodiment, the prior notice signal **S3** is a wireless signal which is sent when it is determined based on the predetermined physical amount that the fire occurrence probability is not less than the first probability. The warning signal **S5** is a wireless signal which is sent when it is determined based on the predetermined physical amount that the fire occurrence probability is not less than the second probability higher than the first probability.

Furthermore, the fire alarm **TR** of the present embodiment further includes: the fire sensor (fire sensing unit) **4;** and the sender (sending unit) **22** for sending a wireless signal. The fire sensor 4 is configured to determine based on the predetermined physical amount whether the fire occurrence probability is not less than the first probability or the second probability, and output the fire preliminary signal **S2** to the controller **1** upon determining that the fire occurrence probability is not less than the first probability, and output the fire conclusive signal **S4** to the controller **1** upon determining that the fire occurrence probability is not less than the second probability. The controller **1** is configured to send the prior notice signal **S3** via the sender **22** upon receiving the fire preliminary signal **S2** from the fire sensor **4,** and provide the fire warning by use of the alarm **5** and send the warning signal **S5** via the sender **22** upon receiving the fire conclusive signal **S4** from the fire sensor **4.** The controller **1** is configured to, upon determining that the wireless signal received via the receiver **21** is the prior notice signal **S3,** calculate the sending time at which the warning signal **S5** is sent, and deactivate the sender **22** and the receiver **21** until the cooperation waiting period **W** including the sending time starts and activate the receiver **21** throughout the cooperation waiting period **W.**

Moreover, in the fire alarm **TR** of the present embodiment, the controller **1** is configured to, until receiving the prior notice signal **S3** via the receiver **21,** operate the receiver **21** intermittently by activating the receiver **21** at intermittent reception intervals **Tx** (**Tx11, Tx12, Tx13**). The controller **1** is configured to, upon receiving the fire preliminary signal **S2** from the fire sensor **4,** start to send the prior notice signal **S3** via the sender **22** at the ending time **T13** of the present intermittent reception interval **Tx** (**Tx13, Tx23**).

Additionally, in the fire alarm **TR** of the present embodiment, the controller **1** is configured to, upon determining that the wireless signal received via the receiver **21** is the synchronization signal **S1,** select the time **T12** after a lapse of the predetermined waiting period **Tw** from the synchronization time (e.g., the ending time of the synchronization signal **S1**) **T11** given by the synchronization signal **S1,** as the starting time for the next intermittent reception interval **Tx** (**Tx12, Tx13**).

Note that, in the fire alarm **TR** of the present embodiment, the control unit (controller) **1** preferably activates the wireless sending/receiving unit (receiver) **2** continuously or intermittently at a shorter interval than the intermittent reception interval, during the cooperation waiting period **W.**

In other words, the controller **1** is configured to operate the receiver **21** continuously throughout the cooperation waiting period **W.** Further, the controller **1** is configured to operate the receiver **21** intermittently by activating the receiver **21** at intervals shorter than the intermittent reception intervals **Tx** throughout the cooperation waiting period **W.**

In the fire alarm **TR** of the present embodiment, upon receiving the activation message, the controller **1** estimates the timing (time **T15**) at which the wireless signal **S5** including the fire warning message is to be sent from the other fire alarm **TR,** and starts the operation for the cooperation waiting period **W** at the timing (time **T14**) earlier than the estimated timing (time **T15**).

In other words, the controller **1** is configured to select, as the starting time of the cooperation waiting period **W,** the time (time **T14**) prior to the sending time (time **T15**). For example, the controller **1** is configured to select, as the starting time of the cooperation waiting period **W,** the time (time **T14**) which is earlier by a predetermined period than the sending time (time **T15**). The predetermined period is determined to allow the controller **1** to successfully receive the warning signal S5 within the cooperation waiting period **W.**

In the fire alarm **TR** of the present embodiment, upon receiving the activation message, the controller **1** estimates the timing (time **T15**) at which the wireless signal **S5** including the fire warning message is to be sent from the other fire alarm **TR,** and may start the operation for the cooperation waiting period in accordance with the estimated timing (time **T15**).

In other words, the controller **1** is configured to select, as the starting time of the cooperation waiting period **W,** the same time as the sending time.

In the fire alarm **TR** of the present embodiment, upon receiving the activation message, the controller **1** estimates the timing (time **T15**) at which the wireless signal **S5** including the fire warning message is to be sent from the other fire alarm **TR,** and controls the sender **2** not to send the wireless signal at the estimated timing (time **T15**).

In other words, the controller **1** is configured not to send a wireless signal via the sender **22** at the sending time (time **T15**).

Further, the fire alarm system is constituted by a plurality of fire alarms of the present embodiment. In other words, the fire alarm system includes a plurality of fire alarms **TR** of the present embodiment.

As described above, the fire alarm **TR** and the fire alarm system of the present embodiment have an effect that it is possible to shorten the time necessary for a plurality of the fire alarms **TR** to cooperate to give the fire warning and to extend battery life.

### (Embodiment 2)

When low power wireless techniques are used, sufficient coverage is provided for the area of a normal residence in terms of wireless communication distance, and thus it is normally sufficiently possible for a wireless signal that is sent from a fire alarm **TR** at the fire origin to be received by a fire alarm **TR** that is not at the fire origin.

However, there may be cases where wireless communication at all times among all the fire alarms **TR** is difficult to realize as the number of fire alarms **TR** increases. For example, a case is conceivable where an electronic device that emits an electromagnetic wave noise is installed in the vicinity of a fire alarm **TR,** and wireless communication of the fire alarm **TR** is hampered by electromagnetic wave noise in a time period in which the electronic device operates.

Therefore, in the present embodiment, a specific fire alarm **TR** (hereinafter referred to as master) is installed at such a place that the master can communicate with all the other fire alarms **TR** (hereinafter referred to as slaves).

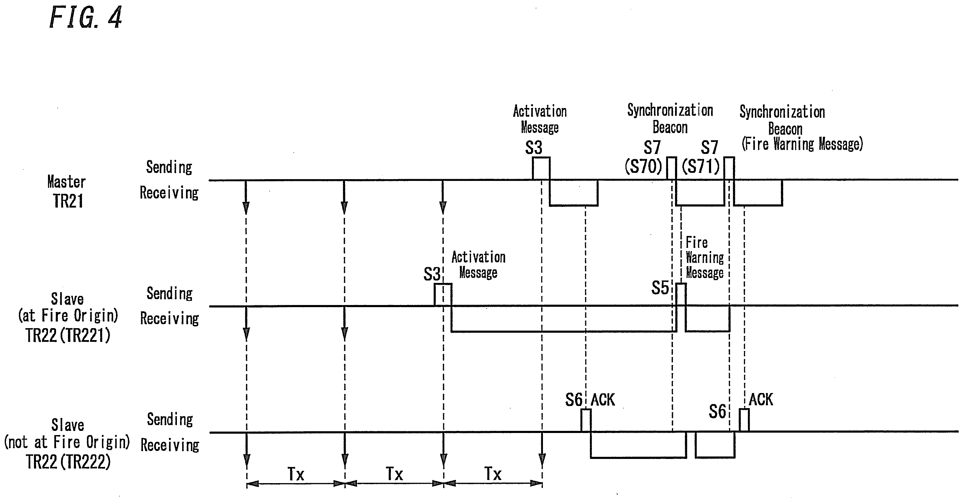

For example, a fire alarm system of the present embodiment includes, as shown in **FIG. 4****,** a first fire alarm (master) **TR** (**TR21**) and a plurality of second fire alarms (slaves) **TR** (**TR22**). The first fire alarm (master) **TR21** is installed within an overlap between communication ranges of all the plurality of second fire alarms (slaves) **TR22** (**TR221** and **TR222**). Note that the slave **TR222** is not installed within the communication range of the slave **TR221.** Therefore, the slave **TR222** cannot perform wireless communication with the slave **221.**

Then, the master **TR** (**TR21**) that has received a wireless signal (wireless signal that includes activation message or fire warning message) sent from any of the slaves **TR** (**TR22**) relays the wireless signal to all the slaves **TR** (**TR22**), and as a result all the fire alarms **TR** can send/receive the wireless signal.

Note that, in the following description, in order to distinguish between the configurations of the master **TR21** and that of the slave **TR22,** a suffix **"M"** is attached to the reference numerals of the components of the master **TR21,** and a suffix **"S"** is attached to the reference numerals of the components of the slave **TR22,** as necessary.

Further, the control unit **1M** of the master **TR** (**TR21**) activates the wireless sending/receiving unit **2M,** regularly (every 24 hours, for example), to send a wireless signal including a regular monitoring message in order to perform check (regular monitoring) of whether or not the slaves **TR** (**TR22**) function normally.

In each slave **TR** (**TR22**), the control unit **1S** monitors at a constant cycle (every one hour, for example) whether or not the fire sensing unit **4S** is functional and whether or not the battery of the battery power unit **6S** is flat, and stores the monitoring results (functional/not functional and battery flat/not flat) in a memory.

Then, upon receiving the regular monitoring message from the master **TR** (**TR21**), the control unit **1S** of the slave **TR** (**TR22**) returns, to the master **TR** (**TR21**), a wireless signal including an information message to provide the monitoring results stored in the memory.

The control unit **1M** of the master **TR** (**TR21**), after sending the wireless signal including the information message, switches the wireless sending/receiving unit **2M** to the receiving state to receive the wireless signal sent from each of the slaves **TR** (**TR22**).

Then, if there is a slave **TR** (**TR22**) that has not sent the wireless signal including the information message during a predetermined time since the wireless signal including the regular monitoring message has been sent, the control unit **1M** of the master **TR** (**TR21**) reports the malfunction of the slave **TR** (**TR22**) (incapable of communication) by sounding a buzzer included in the alarm unit **5M,** or the like.

Alternatively, also in a case where the information message sent from any of the slaves **TR** (**TR22**) is a monitoring result indicative of failure occurrence or running out of battery, the control unit **1M** of the master **TR** (**TR21**) reports that the slave **TR** (**TR22**) has malfunctioned (failure occurred, battery runs out, or the like) by driving the alarm unit **5M.**

In this regard, each control unit **1** of the master **TR** (**TR21**) and the slaves **TR** (**TR22**) is configured to sound an alarm (buzzer sound, voice message, or the like) in order to announce the occurrence of malfunction by a speaker of the alarm unit **5** immediately after it has determined that a failure or running out of battery has occurred. Note that, as described above, due to the master **TR** (**TR21**) performing the regular monitoring of each of slaves **TR** (**TR22**), the communication path between the master **TR** (**TR21**) and each of the slaves **TR** (**TR22**) can be constantly verified to be functioning normally.

The control unit **1M** of the master **TR** (**TR21**) controls, when all the fire alarms **TR** sound the alarms to start the fire cooperation, the wireless sending unit **2M** to send the synchronization beacon **S7** at a constant cycle.

One cycle of the synchronization beacon is divided into a plurality of time slots, and each of the slaves **TR** (**TR22**) is assigned to one dedicated time slot.

A message from the master **TR** (**TR21**) to the slaves **TR** (**TR22**) is included in the synchronization beacon **S7** and is sent, and a wireless signal including a message from the slaves **TR** (**TR22**) to the master **TR** (**TR21**) is stored in the time slot that is assigned to the respective slaves **TR** (**TR22**), and is sent. Therefore, collision of wireless signals that are sent from the plurality of fire alarms **TR** (the master **TR21** and the slaves **TR22**) can be successfully avoided in the period of the fire cooperation.

Furthermore, as shown in **FIG. 4****,** the control unit **1M** of the master **TR** (**TR21**) controls, after relaying the activation message (wireless signal **S3** including activation message) sent from any of the slaves **TR** (**TR221**) to all the other slaves **TR** (**TR222**), the wireless sending/receiving unit **2M** to send the synchronization beacon **S7** (**S70**) at a constant cycle.

Then, the control unit **1S** of the slave **TR** (**TR221**) at the fire origin controls, when the fire conclusive signal is output from the fire sensing unit **4S,** the wireless sending/receiving unit **2S** to store the wireless signal **S5** including the fire warning message in the time slot (first time slot in **FIG. 4**) that is assigned thereto among the plurality of time slots defined by the synchronization beacon **S70,** and send it. Note that the control unit **1S** of each of the slaves **TR** (**TR22**) activates the wireless sending/receiving unit **2S** in the receiving state in the time slots other than the time slot assigned thereto.

The control unit **1M** of the master **TR** (**TR21**) controls, upon receiving the fire warning message that is sent from the slave **TR** (**TR221**) at the fire origin, the wireless sending/receiving unit **2M** to include the fire warning message in the next synchronization beacon **S7** (**S71**) and send it.

Then, the control unit **1S** of each of the slaves **TR** (**TR222**) that are not at the fire origin can receive the fire warning message by receiving the synchronization beacon **S71** sent from the master **TR** (**TR21**). In this example, the synchronization beacon **S71** that includes the fire warning message is used as the alarm signal **S5.**

In the fire alarm system of the present embodiment as described above, the controller (control unit) **1M** of a specific fire alarm (master) **TR21** among a plurality of fire alarms **TR** controls, upon receiving the activation message (wireless signal **S3** including activation message), the sender (wireless sending/receiving unit) **2M** to send the wireless signal **S7** of the synchronization beacon at a constant cycle. The controller (control unit) **1S** of the fire alarm (slave) **TR22** other than the specific fire alarm **TR21** controls, upon receiving the synchronization beacon **S7** by receiving the wireless signal via the receiver (wireless sending/receiving unit) **2S,** the sender (wireless sending/receiving unit) **2S** to store the wireless signal **S5** including the fire warning message in the time slot assigned thereto among a plurality of time slots defined by the synchronization beacon **S7** and send it, and further activates the receiver (wireless sending/receiving unit) **2S** in the time slots other than the time slot that is assigned thereto.

In other words, the plurality of fire alarms **TR** include the first fire alarm (master) **TR21** and a plurality of second fire alarms (slaves) **TR22.** The controller (control unit) **1M** of the first fire alarm **TR21** is configured to, upon receiving the prior notice signal **S3** via the receiver (receiving unit) **21M,** send the synchronization beacon **S7** via the sender (sending unit) **22** at predetermined intervals. The synchronization beacon is a wireless signal for defining a plurality of time slots respectively allocated to the plurality of second fire alarms **TR22.** Each of the controllers (controlling units) **1S** of the respective second fire alarms **TR22** is configured to, upon receiving the synchronization beacon via the receiver (receiving unit) **21S,** send the warning signal **S5** via the sender (sending unit) **22S** during the period determined by the time slot allocated to the corresponding second fire alarm and operate the receiver **21S** throughout a period determined by the time slot not allocated to the corresponding second fire alarm.

Thus, since all the fire alarms **TR** (master and slave) send/receive wireless signals in the TDMA system during the cooperation waiting period **W,** it is possible to shorten the time necessary for all the plurality of fire alarms **TR** to give the fire alarm in cooperation.

### (Embodiment 3)

In a case where the master **TR** (**TR21**) relays the wireless signal sent from one of the slaves **TR** (**TR22**) similar to Embodiment 2, a delay time close to double of the intermittent reception interval **Tx** may occur for the activation message (wireless signal **S3** including activation message) sent from the slave **TR** (**TR221**) at the fire origin to be relayed by the master **TR** (**TR21**) and reach the slave **TR** (**TR222**) that is not at the fire origin.

In the present embodiment, two waiting periods **Tw** (**Tw1** and **Tw2**) from the end (time **T31**) of the synchronization signal **S1** until restarting timing of the intermittent reception interval **Tx** are provided, and the master **TR** (**TR21**) selects one of the waiting periods **Tw1** and **Tw2** and the slaves **TR** (**TR22**) select the other of the waiting periods **Tw1** and **Tw2.**

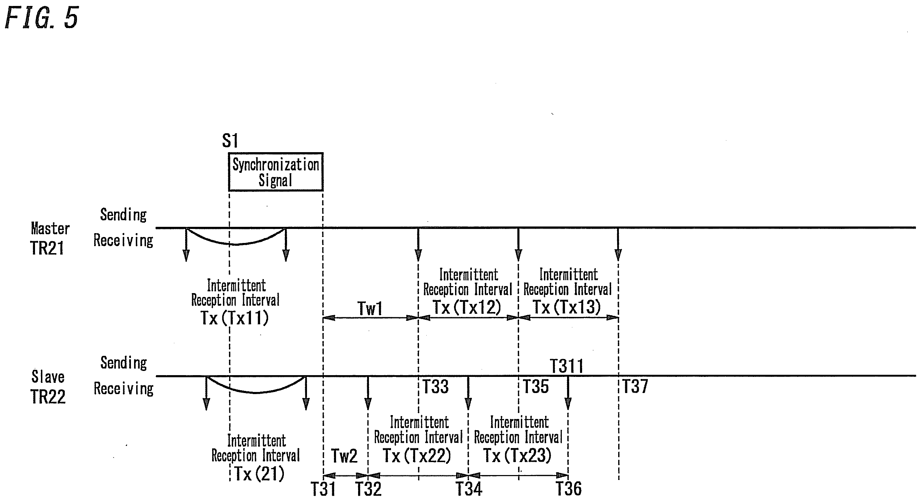

That is, as shown in **FIG. 5****,** the control unit **1M** of the master **TR** (**TR21**) restarts timing of the intermittent reception interval **Tx** (**Tx12**) by the timer at the time (time **T33**) when the waiting period **Tw1** elapses from the end (time T) of the synchronization signal **S1.**

On the other hand, the control units **1S** of the slaves **TR** (**TR22**) restart timing the intermittent reception interval **Tx** (**Tx22**) by the timer at the time (time **T32**) when the waiting period **Tw2** (**<Tw1**) elapses from the end (time **T31**) of the synchronization signal **S1** (see **FIG. 5**).

Therefore, after the synchronization signal **S1** is received, the timings at which timing the intermittent reception intervals **Tx** (**Tx22, Tx23,** ...) starts coincide in the slaves **TR** (**TR22**) in which the same waiting period **Tw2** is selected.

Meanwhile, with regard to a relation between the master **TR** (**TR21**) and the slaves **TR** (**TR22**), the timings when the operations of timing the intermittent reception intervals **Tx** start differ by only an amount of the difference between the waiting periods **Tw** (= **Tw1 - Tw2**).

However, the control unit **1M** of the master **TR** (**TR21**) starts to time the intermittent reception interval **Tx** (**Tx22**) by a different timer at the time when the waiting period **Tw2** selected in the slaves **TR** (**TR22**) elapses.

Similarly, the control units **1S** of the slaves **TR** (T**R**22) also start to time the intermittent reception interval **Tx** (**Tx12**) by different timers at the time when the waiting period **Tw1** selected in the master **TR** (**TR21**) elapses.

That is, the control units **1** of the master **TR** and the slaves **TR** are aware of the timing when timing the intermittent reception intervals **Tx** of the slaves **TR** is completed and the timings when timing the intermittent reception intervals **Tx** of the master **TR** is completed.

For example, in any of the slaves **TR** (**TR22**), the control unit **1S** that has received the fire preliminary signal **S2** from the fire sensing unit **4S** activates the wireless sending/receiving unit **2S** before completing timing the intermittent reception intervals **Tx** by the two different timers.

Then, the control unit **1S** of the slave **TR** (**TR22**) at the fire origin sends the wireless signals **S3** including the activation message in sending periods that include timings (time **T37** and **T36**) when timing the two different intermittent reception intervals **Tx** (**Tx13** and **Tx23**) are completed, respectively.

For example, the control unit **1S** that has received the fire preliminary signal **S2** from the fire sensing unit **4S** in the period from time **T34** to **T35** sends the wireless signal **S3** including the activation message in a sending period that includes the timing when timing the intermittent reception interval **Tx12** of the master **TR21** is completed (time **T35**), and after that, sends the wireless signal **S3** including the activation message in a sending period that includes the timing when timing the intermittent reception interval **Tx23** of the slaves **TR22** is completed (time **T36**).

For example, the control unit **1S** that has received the fire preliminary signal **S2** from the fire sensing unit **4S** in the period from time **T35** to **T36** sends the wireless signal **S3** including the activation message in a sending period that includes the timing when timing the intermittent reception interval **Tx23** of the slave **TR22** is completed (time **T36**), and after that, sends the wireless signal **S3** including the activation message in a sending period that includes the timing when timing the intermittent reception interval **Tx13** of the master **TR21** is completed (time **T37**).

Accordingly, any of the master **TR** (**TR21**) and the slaves **TR** (**TR22**) that are not at the fire origin can receive the wireless signal **S3** including the activation message immediately after the completion of the timing the intermittent reception intervals **Tx** (**Tx13** and **Tx23**).

Furthermore, the control unit **1M** of the master **TR** (**TR21**) that has received the activation message (wireless signal **S3** including activation message) controls the wireless sending/receiving unit **2M** to send (relay) the wireless signal **S3** including the activation message in the sending period that includes the timing when timing the intermittent reception interval **Tx** of the slaves **TR** (**TR22**) is completed.

Therefore, the slaves **TR** (**TR222**) that failed to receive the wireless signal sent from the slave **TR** (**TR221**) at the fire origin can receive the wireless signal relayed by the master **TR** (**TR21**).

Note that the operations of the master **TR** (**TR21**) and the slaves **TR** (**TR22**) after receiving the activation message are common to Embodiment 1 and Embodiment 2, therefore, detailed description will be omitted.

In the fire alarms of the present embodiment described above, the waiting period **Tw** is selected from candidates of a plurality of waiting periods (**Tw1** and **Tw2**) that are different from each other. The controller (control unit) **1** controls, in a case where the wireless signal **S3** including the activation message is sent from the sender (wireless sending/receiving unit) **2,** the sender (wireless sending/receiving unit) **2** to transmit at the timing when timing the intermittent reception interval **Tx** which starts at the start timing defined as timing when the selected waiting period **Tw** elapses is completed, and at the timings when operations of timing the intermittent reception intervals **Tx** which start at the start timings defined as timings when the waiting periods **Tw** other than the selected waiting period **Tw** elapses are completed.

In other words, the controller (control unit) **1** is configured to, until receiving the prior notice signal **S3** via the receiver (receiving unit) **21,** operate the receiver **21** intermittently by activating the receiver **21** at the first intermittent reception intervals **Tx.** The controller **1** is configured to select, as the first waiting period **Tw1** (**Tw2**), one of a plurality of waiting periods **Tw** different from each other. The controller **1** is configured to, upon determining that the wireless signal received via the receiver **21** is the synchronization signal **S1,** select, as the starting time of the next first intermittent reception interval **Tx12** (**Tx22**), the time **T33** (**T32**) after a lapse of the first waiting period **Tw1** (**Tw2**) from the synchronization time **T31** given by the synchronization signal **S1,** and select, as the starting time of the next second intermittent reception interval **Tx22** (**Tx12**), the time **T32** (**T33**) after a lapse of the second waiting period **Tw2** (**Tw1**) out of the remaining waiting periods **Tw** from the synchronization time **T31.** The controller **1** is configured to, upon receiving the fire preliminary signal **S2** from the fire sensor **4,** start to send the prior notice signal **S3** via the sender **22** at each of the ending time **T35, T37,** ... (**T35**, **T37,** ...) of the present first intermittent reception interval **Tx12, Tx13,** ... (**Tx22, Tx23,** ...) and the ending time **T34, T36,** ... of the present second intermittent reception interval **Tx22, Tx23,** ... (**Tx12, Tx13,** ...).

In the present embodiment as described above, since the timing of starting to time the intermittent reception interval **Tx** in the master **TR** (**TR21**) differs from that in the slave **TR** (**TR22**) by an amount of the difference between the waiting periods **Tw1** and **Tw2,** it is possible to shorten the delay time from the time when the slave **TR** (**TR221**) at the fire origin sends the activation message until the time when the slaves **TR** (**TR222**) that are not at the fire origin receive the activation message.

### (Embodiment 4)

In Embodiment 2 and 3, although one master **TR** (**TR21**) relays the wireless signal to a plurality of slaves **TR** (**TR22**), a case is conceivable where only one master **TR** (**TR21**) is not sufficient to relay the wireless signal to the plurality of slaves **TR** (**TR22**).

In the present embodiment, a relay function is installed in the control units **1** of a plurality of fire alarms **TR,** and enabling/disabling of the relay function is selectable according to a setting of a DIP switch, or the like.

Therefore, the control unit **1** of the fire alarm **TR** in which the relay function is enabled relays the wireless signal, upon receiving the wireless signal sent from the other fire alarm **TR,** by controlling the wireless sending/receiving unit **2** to send the wireless signal.

However, except for enabling/disabling of the relay function being made selectable, the fire alarm **TR** of the present embodiment has a similar configuration with Embodiment 1. Therefore, the control unit **1** of the fire alarm **TR** that relays the wireless signal controls the wireless sending/receiving unit **2** to send the wireless signal including the activation message or the fire warning message at the timing when the wireless sending/receiving unit **2** of the fire alarm **TR** to which the wireless signal is relayed is activated (at the timing when timing the intermittent reception interval **Tx** is completed).

Here, in the fire alarm **TR** that relays the wireless signal, it requires some time for the wireless sending/receiving unit **2** to switch from the receiving state to the sending state. Therefore, the receiving period in the intermittent receiving operation of the fire alarm **TR** to which the wireless signal is relayed may end before the wireless sending/receiving unit **2** of the fire alarm **TR** that relays the wireless signal switches from the receiving state to the sending state after having received the fire warning message (wireless signal **S5** including fire alarm message) from the fire alarm **TR** at the fire origin in the cooperation waiting period **W.**

Therefore, in the present embodiment, the control unit **1** of the fire alarm **TR** at the fire origin controls the wireless sending/receiving unit **2** to send the wireless signal before the timing when the fire alarm **TR** that relays the wireless signal is scheduled to relay the wireless signal **S5** including the fire warning message (receiving timing in the intermittent receiving operation of the fire alarm **TR** to which the wireless signal is relayed).

In the fire alarm system described above, a plurality of fire alarms **TR** relay, upon receiving the wireless signal sent from the other fire alarm **TR,** the wireless signal to other fire alarms **TR** other than the fire alarm **TR** that has sent the wireless signal as necessary. The controller (control unit) **1** of the fire alarm **TR** that relays the wireless signal including the activation message and the fire warning message controls the sender (wireless sending/receiving unit) **2** to send the wireless signal including the fire warning message at the timing when the receiver (wireless sending/receiving unit) **2** of the fire alarm **TR** to which the wireless signal is to be sent is activated. The controller **1** of the fire alarm **TR** at the fire origin that sends the activation message controls the sender (wireless sending/receiving unit) **2** to send the wireless signal including the fire warning message before the timing when the fire alarm **TR** that relays the wireless signal including the fire warning message is scheduled to relay the wireless signal.

In other words, each controller (control unit) **1** is configured to, upon receiving the warning signal **S5** via the receiver (receiving unit) **21,** send the received warning signal **S5** via the sender (sending unit) **22** during the receiving period when the receiver **21** of another fire alarm **TR** is in operation. Each controller **1** is configured to, upon receiving the fire conclusive signal **S4** from the fire sensor **4,** send the warning signal **S5** via the sender **22** before the receiving period.

Accordingly, it is possible to avoid an undesired situation in which the receiving period in the intermittent receiving operation of the fire alarm **TR** to which the wireless signal is relayed ends before the wireless sending/receiving unit **2** of the fire alarm **TR** that relays the wireless signal switches from the receiving state to the sending state. Consequently, it is possible to shorten the time necessary for a plurality of fire alarms to cooperate to give the fire alarm.

## Claims

1. A fire alarm (TR), comprising:
an alarm (5) for providing fire warning;
a receiver (2) for receiving a wireless signal; and
a controller (1) configured to control the alarm and the receiver,
wherein:
the controller is configured to, upon acknowledging that the wireless signal received via the receiver is a warning signal (S5), provide the fire warning by use of the alarm; and
the controller is configured to: upon determining that the wireless signal received via the receiver is a prior notice signal (S3), calculate a cooperation waiting period (W) including a sending time (T15) at which the warning signal is sent; and deactivate the receiver until the cooperation waiting period (W) starts and activate the receiver throughout the cooperation waiting period;
wherein:
the prior notice signal (S3) is a wireless signal which is sent when it is determined based on a predetermined physical amount that a fire occurrence probability is not less than a first probability; and
the warning signal (S5) is a wireless signal which is sent when it is determined based on the predetermined physical amount that the fire occurrence probability is not less than a second probability higher than the first probability; and wherein
the controller (1) is configured to calculate the sending time (T15) based on a time (T13) when the controller (1) has received the prior notice signal (S3).

2. The fire alarm according to claim 1, wherein:
the prior notice signal (S3) and the warning signal (S5) are to be sent from a second fire alarm (TR11);
the second fire alarm includes a fire sensor (4), a sender (2) for sending a wireless signal, and a second controller;
the fire sensor (4) is configured to
determine, at a cycle, based on the predetermined physical amount whether the fire occurrence probability is not less than the first probability or the second probability, and
output a fire preliminary signal (S2) to the second controller (1) upon determining that the fire occurrence probability is not less than the first probability, and
output a fire conclusive signal (S4) to the second controller (1) upon determining that the fire occurrence probability is not less than the second probability;
the second controller is configured to
send the prior notice signal (S3) via the sender upon receiving the fire preliminary signal (S2) from the fire sensor (4), and
provide the fire warning by use of the alarm (5) and send the warning signal (S5) via the sender (2) upon receiving the fire conclusive signal (S4) from the fire sensor (4); and
the controller is configured to calculate the sending time (T15) based on the time (S13) when the controller has received the prior notice signal (S3) and the cycle of the fire sensor.

3. The fire alarm according to claim 1, wherein:
the controller (1) is configured to calculate the sending time (T15) from the time (T13) when the controller has received the prior notice signal (S3) based on a correlative relationship between the time when the prior notice signal (S3) is sent and the time when the alarm signal (S5) is sent.

4. The fire alarm according to claim 1, further comprising:
a fire sensor (4); and
a sender (2) for sending a wireless signal,
wherein:
the fire sensor (4) is configured to
determine based on the predetermined physical amount whether the fire occurrence probability is not less than the first probability or the second probability, and
output a fire preliminary signal (S2) to the controller (1) upon determining that the fire occurrence probability is not less than the first probability, and
output a fire conclusive signal (S4) to the controller (1) upon determining that the fire occurrence probability is not less than the second probability;
the controller (1) is configured to
send the prior notice signal (S3) via the sender upon receiving the fire preliminary signal (S2) from the fire sensor, and
provide the fire warning by use of the alarm (5) and send the warning signal (S5) via the sender upon receiving the fire conclusive signal (S4) from the fire sensor; and
the controller (1) is configured to, upon determining that the wireless signal received via the receiver is the prior notice signal (S3), calculate the sending time (T15) at which the warning signal (S5) is sent, and deactivate the sender and the receiver until the cooperation waiting period (W) including the sending time (T15) starts and activate the receiver throughout the cooperation waiting period (W).

5. The fire alarm according to claim 4, wherein:
the fire sensor (4) is configured to determine, at a cycle, based on the predetermined physical amount whether the fire occurrence probability is not less than the first probability or the second probability, and
the fire sensor is configured to shorten the cycle when it determines that the fire occurrence probability is not less than the first probability.

6. The fire alarm according to claim 4, wherein:
the controller (1) is configured to, until receiving the prior notice signal (S3) via the receiver, operate the receiver intermittently by activating the receiver at intermittent reception intervals; and
the controller is configured to, upon receiving the fire preliminary signal (S2) from the fire sensor, start to send the prior notice signal (S3) via the sender at an ending time of the present intermittent reception interval.

7. The fire alarm according to claim 6, wherein
the controller is configured to, upon determining that the wireless signal received via the receiver is a synchronization signal (S1), select a time (T12) after a lapse of a predetermined waiting period (Tw) from a synchronization time (T11) given by the synchronization signal (S1), as a starting time for the next intermittent reception interval (Tx).

8. The fire alarm according to claim 1, wherein
the controller is configured to operate the receiver continuously throughout the cooperation waiting period (W).

9. The fire alarm according to claim 1, wherein
the controller is configured to operate the receiver intermittently by activating the receiver at intervals shorter than the intermittent reception intervals throughout the cooperation waiting period (W).

10. The fire alarm according to claim 1, wherein
the controller is configured to select, as a starting time (T14) of the cooperation waiting period (W), a time prior to the sending time (T15), or
the controller is configured to select, as a starting time of the cooperation waiting period, the same time as the sending time.

11. The fire alarm according to claim 4, wherein
the controller is configured not to send a wireless signal via the sender at the sending time (T15).

12. The fire alarm according to claim 4, wherein:
the controller is configured to, until receiving the prior notice signal (S3) via the receiver, operate the receiver intermittently by activating the receiver at first intermittent reception intervals;
the controller is configured to select, as a first waiting period (Tw1), one of a plurality of waiting periods different from each other;
the controller is configured to, upon determining that the wireless signal received via the receiver is a synchronization signal (S1), select, as a starting time of the next first intermittent reception interval (Tx), a time after a lapse of the first waiting period (Tw1) from a synchronization time (T31) given by the synchronization signal (S1), and select, as a starting time of a next second intermittent reception interval, a time after a lapse of a second waiting period out of the remaining waiting periods from the synchronization time; and
the controller is configured to, upon receiving the fire preliminary signal from the fire sensor, start to send the prior notice signal via the sender at each of an ending time of the present first intermittent reception interval and an ending time of the present second intermittent reception interval.

13. A fire alarm system, comprising a plurality of fire alarms according to any one of claims 4 to 12.

14. The fire alarm system according to claim 13, wherein:
the plurality of fire alarms include a first fire alarm and a plurality of second fire alarms;
the controller of the first fire alarm is configured to, upon receiving the prior notice signal via the receiver, send a synchronization beacon (S7) via the sender at predetermined intervals;
the synchronization beacon is a wireless signal for defining a plurality of time slots respectively allocated to the plurality of second fire alarms; and
each of the controllers of the respective second fire alarms is configured to, upon receiving the synchronization beacon via the receiver, send the warning signal via the sender during a period determined by the time slot allocated to the corresponding second fire alarm and operate the receiver throughout a period determined by the time slot not allocated to the corresponding second fire alarm.

15. The fire alarm system according to claim 13, wherein:
each controller is configured to, upon receiving the warning signal via the receiver, send the received warning signal via the sender during a receiving period when the receiver of another fire alarm is in operation; and
each controller is configured to, upon receiving the fire conclusive signal from the fire sensor, send the warning signal via the sender before the receiving period.

## Patentansprüche

1. Brandmelder (TR), welcher Folgendes umfasst:
einen Alarm (5) zum Bereitstellen einer Brandwarnung;
einen Empfänger (2) zum Empfangen eines drahtlosen Signals; und
einen Controller (1), der konfiguriert ist zum Steuern des Alarms und des Empfängers, wobei:
der Controller, bei Bestätigung, dass es sich bei dem drahtlosen Signal, das über den Empfänger empfangen wird, um ein Warnsignal (S5) handelt, konfiguriert ist zum Bereitstellen der Brandwarnung durch Verwendung des Alarms; und
der Controller zu Folgendem konfiguriert ist: bei Bestimmung, dass es sich bei dem drahtlosen Signal, das über den Empfänger empfangen wird, um ein Vorankündigungssignal (S3) handelt, Berechnen eines Kooperationswartezeitraums (W), einschließlich einer Sendezeit (T15), zu welcher das Warnsignal gesendet wird; und Deaktivieren des Empfängers, bis der Kooperationswartezeitraum (W) startet, und Aktivieren des Empfängers über den gesamten Kooperationswartezeitraum hinweg;
wobei:
das Vorankündigungssignal (S3) ein drahtloses Signal ist, welches gesendet wird, wenn, basierend auf einer vorbestimmten physikalischen Größe, bestimmt wird, dass eine Brandauftrittswahrscheinlichkeit nicht geringer als eine erste Wahrscheinlichkeit ist; und das Warnsignal (S5) ein drahtloses Signal ist, welches gesendet wird, wenn, basierend auf der vorbestimmten physikalischen Größe bestimmt wird, dass die Brandauftrittswahrscheinlichkeit nicht geringer als eine zweite Wahrscheinlichkeit ist, die höher als die erste Wahrscheinlichkeit ist; und wobei
der Controller (1) konfiguriert ist zum Berechnen der Sendezeit (T15) basierend auf einer Zeit (T13), wenn der Controller (1) das Vorankündigungssignal (S3) empfangen hat.

2. Brandmelder nach Anspruch 1, wobei:
das Vorankündigungssignal (S3) und das Warnsignal (S5) von einem zweiten Brandmelder (TR11) gesendet werden sollen;
der zweite Brandmelder einen Brandsensor (4), einen Sender (2) zum Senden eines drahtlosen Signals und einen zweiten Controller beinhaltet;
der Brandsensor (4) konfiguriert ist zum Bestimmen, in einem Zyklus, basierend auf der vorbestimmten physikalischen Größe, ob die Brandauftrittswahrscheinlichkeit nicht geringer als die erste Wahrscheinlichkeit oder die zweite Wahrscheinlichkeit ist, und
Ausgeben eines Brandvorsignals (S2) an den zweiten Controller (1) bei Bestimmung, dass die Brandauftrittswahrscheinlichkeit nicht geringer als die erste Wahrscheinlichkeit ist, und
Ausgeben eines Brandentscheidungssignals (S4) an den zweiten Controller (1) bei Bestimmung, dass die Brandauftrittswahrscheinlichkeit nicht geringer als die zweite Wahrscheinlichkeit ist;
der zweite Controller konfiguriert ist zum Senden des Vorankündigungssignals (S3) über den Sender bei Empfang des Brandvorsignals (S2) von dem Brandsensor (4), und
Bereitstellen der Brandwarnung durch Verwendung des Alarms (5) und Senden des Warnsignals (S5) über den Sender (2) bei Empfang des Brandentscheidungssignals (S4) von dem Brandsensor (4); und
der Controller konfiguriert ist zum Berechnen der Sendezeit (T15) basierend auf der Zeit (S13), wenn der Controller das Vorankündigungssignal (S3) empfangen hat, und dem Zyklus des Brandsensors.

3. Brandmelder nach Anspruch 1, wobei:
der Controller (1) konfiguriert ist zum Berechnen der Sendezeit (T15) ab der Zeit (T13), wenn der Controller das Vorankündigungssignal (S3) empfangen hat, basierend auf einer korrelativen Beziehung zwischen der Zeit, wenn das Vorankündigungssignal (S3) gesendet wird, und der Zeit, wenn das Alarmsignal (S5) gesendet wird.

4. Brandmelder nach Anspruch 1, welcher ferner Folgendes umfasst:
einen Brandsensor (4); und
einen Sender (2) zum Senden eines drahtlosen Signals, wobei:
der Brandsensor (4) konfiguriert ist zum Bestimmen, basierend auf der vorbestimmten physikalischen Größe, ob die Brandauftrittswahrscheinlichkeit nicht geringer als die erste Wahrscheinlichkeit oder die zweite Wahrscheinlichkeit ist, und
Ausgeben eines Brandvorsignals (S2) an den Controller (1) bei Bestimmung, dass die Brandauftrittswahrscheinlichkeit nicht geringer als die erste Wahrscheinlichkeit ist, und
Ausgeben eines Brandentscheidungssignals (S4) an den Controller (1) bei Bestimmung, dass die Brandauftrittswahrscheinlichkeit nicht geringer als die zweite Wahrscheinlichkeit ist;
der Controller (1) konfiguriert ist zum Senden des Vorankündigungssignals (S3) über den Sender bei Empfang des Brandvorsignals (S2) von dem Brandsensor, und
Bereitstellen der Brandwarnung durch Verwendung des Alarms (5) und Senden des Warnsignals (S5) über den Sender bei Empfang des Brandentscheidungssignals (S4) von dem Brandsensor; und
der Controller (1), bei Bestimmung, dass es sich bei dem drahtlosen Signal, das über den Empfänger empfangen wird, um das Vorankündigungssignal (S3) handelt, konfiguriert ist zum Berechnen der Sendezeit (T15), zu welcher das Warnsignal (S5) gesendet wird, und Deaktivieren des Senders und des Empfängers, bis der Kooperationswartezeitraum (W), einschließlich der Sendezeit (T15), startet, und Aktivieren des Empfängers über den gesamten Kooperationswartezeitraum (W) hinweg.

5. Brandmelder nach Anspruch 4, wobei:
der Brandsensor (4) konfiguriert ist zum Bestimmen, in einem Zyklus, basierend auf der vorbestimmten physikalischen Größe, ob die Brandauftrittswahrscheinlichkeit nicht geringer als die erste Wahrscheinlichkeit oder die zweite Wahrscheinlichkeit ist, und
der Brandsensor konfiguriert ist zum Verkürzen des Zyklus, wenn er bestimmt, dass die Brandauftrittswahrscheinlichkeit nicht geringer als die erste Wahrscheinlichkeit ist.

6. Brandmelder nach Anspruch 4, wobei:
der Controller (1), bis zum Empfang des Vorankündigungssignals (S3) über den Empfänger, konfiguriert ist zum intermittierenden Betreiben des Empfängers durch Aktivierung des Empfängers in intermittierenden Empfangsintervallen; und
der Controller, bei Empfang des Brandvorsignals (S2) von dem Brandsensor, konfiguriert ist zum Starten des Sendens des Vorankündigungssignals (S3) über den Sender zu einer Endzeit des gegenwärtigen intermittierenden Empfangsintervalls.

7. Brandmelder nach Anspruch 6, wobei
der Controller, bei Bestimmung, dass es sich bei dem drahtlosen Signal, das über den Empfänger empfangen wird, um ein Synchronisationssignal (S1) handelt, konfiguriert ist zum Auswählen einer Zeit (T12) nach Verstreichen eines vorbestimmten Wartezeitraums (Tw) ab einer Synchronisationszeit (T11), die durch das Synchronisationssignal (S1) vorgegeben wird, als eine Startzeit für das nächste intermittierende Empfangsintervall (Tx).

8. Brandmelder nach Anspruch 1, wobei
der Controller konfiguriert ist zum kontinuierlichen Betreiben des Empfängers über den gesamten Kooperationswartezeitraum (W) hinweg.

9. Brandmelder nach Anspruch 1, wobei
der Controller konfiguriert ist zum intermittierenden Betreiben des Empfängers durch Aktivierung des Empfängers in Intervallen, die kürzer als die intermittierenden Empfangsintervalle sind, über den gesamten Kooperationswartezeitraum (W) hinweg.

10. Brandmelder nach Anspruch 1, wobei
der Controller konfiguriert ist zum Auswählen, als eine Startzeit (T14) des Kooperationswartezeitraums (W), einer Zeit vor der Sendezeit (T15), oder
der Controller konfiguriert ist zum Auswählen, als eine Startzeit des Kooperationswartezeitraums, der gleichen Zeit wie die Sendezeit.

11. Brandmelder nach Anspruch 4, wobei
der Controller konfiguriert ist, ein drahtloses Signal zu der Sendezeit (T15) nicht über den Sender zu senden.

12. Brandmelder nach Anspruch 4, wobei:
der Controller, bis zum Empfang des Vorankündigungssignals (S3) über den Empfänger, konfiguriert ist zum intermittierenden Betreiben des Empfängers durch Aktivierung des Empfängers in ersten intermittierenden Empfangsintervallen;
der Controller konfiguriert ist zum Auswählen, als ein erster Wartezeitraum (Tw1), eines aus mehreren Wartezeiträumen, die sich voneinander unterscheiden;
der Controller, bei Bestimmung, dass es sich bei dem drahtlosen Signal, das über den Empfänger empfangen wird, um ein Synchronisationssignal (S1) handelt, konfiguriert ist zum Auswählen, als eine Startzeit des nächsten ersten intermittierenden Empfangsintervalls (Tx), einer Zeit nach Verstreichen des ersten Wartezeitraums (Tw1) ab einer Synchronisationszeit (T31), die durch das Synchronisationssignal (S1) vorgegeben wird, und Auswählen, als eine Startzeit eines nächsten zweiten intermittierenden Empfangsintervalls, einer Zeit nach Verstreichen eines zweiten Wartezeitraums aus den verbleibenden Wartezeiträumen ab der Synchronisationszeit; und
der Controller, bei Empfang des Brandvorsignals von dem Brandsensor, konfiguriert ist zum Starten des Sendens des Vorankündigungssignals über den Sender zu jeder aus einer Endzeit des gegenwärtigen ersten intermittierenden Empfangsintervalls und einer Endzeit des gegenwärtigen zweiten intermittierenden Empfangsintervalls.

13. Brandmeldeanlage, welche mehrere Brandmelder nach einem der Ansprüche 4 bis 12 umfasst.

14. Brandmeldeanlage nach Anspruch 13, wobei:
die mehreren Brandmelder einen ersten Brandmelder und mehrere zweite Brandmelder beinhalten;
der Controller des ersten Brandmelders, bei Empfang des Vorankündigungssignals über den Empfänger, konfiguriert ist zum Senden eines Synchronisations-Beacons (S7) über den Sender in vorbestimmten Intervallen;
das Synchronisations-Beacon ein drahtloses Signal zum Definieren mehrerer Zeitschlitze, die entsprechend den mehreren zweiten Brandmeldern zugeordnet sind, ist; und
jeder der Controller der entsprechenden zweiten Brandmelder, bei Empfang des Synchronisations-Beacons über den Empfänger, konfiguriert ist zum Senden des Warnsignals über den Sender während eines Zeitraums, der durch den Zeitschlitz bestimmt wird, der dem entsprechenden zweiten Brandmelder zugeordnet ist, und Betreiben des Empfängers über einen gesamten Zeitraum hinweg, der durch den Zeitschlitz bestimmt wird, der nicht dem entsprechenden zweiten Brandmelder zugeordnet ist.

15. Brandmeldeanlage nach Anspruch 13, wobei:
jeder Controller, bei Empfang des Warnsignals über den Empfänger, konfiguriert ist zum Senden des empfangenen Warnsignals über den Sender während eines Empfangszeitraums, wenn der Empfänger eines anderen Brandmelders in Betrieb ist; und
jeder Controller, bei Empfang des Brandentscheidungssignals von dem Brandsensor, konfiguriert ist zum Senden des Warnsignals über den Sender vor dem Empfangszeitraum.

## Revendications

1. Alarme incendie (TR), comprenant :
une alarme (5) destinée à fournir un avertissement d'incendie ;
un récepteur (2) destiné à recevoir un signal sans fil ; et
un contrôleur (1) configuré de manière à commander l'alarme et le récepteur, dans lequel :
le contrôleur est configuré de manière à, après avoir reconnu que le signal sans fil reçu par l'intermédiaire du récepteur est un signal d'avertissement (S5), fournir l'avertissement d'incendie en utilisant l'alarme ; et
le contrôleur est configuré de manière à : après avoir déterminé que le signal sans fil reçu par l'intermédiaire du récepteur est un signal de notification préalable (S3), calculer une période d'attente de coopération (W) incluant un instant d'envoi (T15) auquel le signal d'avertissement est envoyé ; et désactiver le récepteur jusqu'à ce que la période d'attente de coopération (W) commence, et activer le récepteur tout au long de la période d'attente de coopération ;
dans lequel :
le signal de notification préalable (S3) est un signal sans fil qui est envoyé lorsqu'il est déterminé, sur la base d'une quantité physique prédéterminée, qu'une probabilité de survenue d'incendie n'est pas inférieure à une première probabilité ; et
le signal d'avertissement (S5) est un signal sans fil qui est envoyé lorsqu'il est déterminé, sur la base de la quantité physique prédéterminée, que la probabilité de survenue d'incendie n'est pas inférieure à une seconde probabilité supérieure à la première probabilité ; et dans lequel
le contrôleur (1) est configuré de manière à calculer l'instant d'envoi (T15) sur la base d'un instant (T13) où le contrôleur (1) a reçu le signal de notification préalable (S3).

2. Alarme incendie selon la revendication 1, dans laquelle :
le signal de notification préalable (S3) et le signal d'avertissement (S5) doivent être envoyés à partir d'une seconde alarme incendie (TR11) ;
la seconde alarme incendie inclut un capteur d'incendie (4), un émetteur (2) destiné à envoyer un signal sans fil, et un second contrôleur ;
le capteur d'incendie (4) est configuré de manière à :
déterminer, au cours d'un cycle, sur la base de la quantité physique prédéterminée, si la probabilité de survenue d'incendie n'est pas inférieure à la première probabilité ou à la seconde probabilité ; et
fournir en sortie un signal préliminaire d'incendie (S2) au second contrôleur (1) lorsqu'il est déterminé que la probabilité de survenue d'incendie n'est pas inférieure à la première probabilité ; et
fournir en sortie un signal conclusif d'incendie (S4) au second contrôleur (1) lorsqu'il est déterminé que la probabilité de survenue d'incendie n'est pas inférieure à la seconde probabilité ;
le second contrôleur est configuré de manière à :
envoyer le signal de notification préalable (S3) par l'intermédiaire de l'émetteur, suite à la réception du signal préliminaire d'incendie (S2) en provenance du capteur d'incendie (4) ; et
fournir l'avertissement d'incendie en utilisant l'alarme (5), et envoyer le signal d'avertissement (S5) par l'intermédiaire de l'émetteur (2) suite à la réception du signal conclusif d'incendie (S4) en provenance du capteur d'incendie (4) ; et
le contrôleur est configuré de manière à calculer l'instant d'envoi (T15) sur la base de l'instant (S13) où le contrôleur a reçu le signal de notification préalable (S3) et du cycle du capteur d'incendie.

3. Alarme incendie selon la revendication 1, dans laquelle :
le contrôleur (1) est configuré de manière à calculer l'instant d'envoi (T15) à partir de l'instant (T13) où le contrôleur a reçu le signal de notification préalable (S3) sur la base d'une relation corrélative entre l'instant où le signal de notification préalable (S3) est envoyé et l'instant où le signal d'avertissement (S5) est envoyé.

4. Alarme incendie selon la revendication 1, comprenant en outre :
un capteur d'incendie (4) ; et
un émetteur (2) destiné à envoyer un signal sans fil ;
dans lequel :
le capteur d'incendie (4) est configuré de manière à :
déterminer, sur la base de la quantité physique prédéterminée, si la probabilité de survenue d'incendie n'est pas inférieure à la première probabilité ou à la seconde probabilité ; et
fournir en sortie un signal préliminaire d'incendie (S2) au contrôleur (1) lorsqu'il est déterminé que la probabilité de survenue d'incendie n'est pas inférieure à la première probabilité ; et
fournir en sortie un signal conclusif d'incendie (S4) au contrôleur (1) lorsqu'il est déterminé que la probabilité de survenue d'incendie n'est pas inférieure à la seconde probabilité ;
le contrôleur (1) est configuré de manière à :
envoyer le signal de notification préalable (S3), par l'intermédiaire de l'émetteur, suite à la réception du signal préliminaire d'incendie (S2) en provenance du capteur d'incendie ; et
fournir l'avertissement d'incendie en utilisant l'alarme (5) et envoyer le signal d'avertissement (S5) par l'intermédiaire de l'émetteur suite à la réception du signal conclusif d'incendie (S4) en provenance du capteur d'incendie ; et
le contrôleur (1) est configuré de manière à, lorsqu'il a été déterminé que le signal sans fil reçu par l'intermédiaire du récepteur est le signal de notification préalable (S3), calculer l'instant d'envoi (T15) auquel le signal d'avertissement (S5) est envoyé, et désactiver l'émetteur et le récepteur jusqu'à ce que la période d'attente de coopération (W) incluant l'instant d'envoi (T15) commence, et activer le récepteur tout au long de la période d'attente de coopération (W).

5. Alarme incendie selon la revendication 4, dans laquelle :
le capteur d'incendie (4) est configuré de manière à déterminer, au cours d'un cycle, sur la base de la quantité physique prédéterminée, si la probabilité de survenue d'incendie n'est pas inférieure à la première probabilité ou à la seconde probabilité ; et
le capteur d'incendie est configuré de manière à raccourcir le cycle lorsqu'il détermine que la probabilité de survenue d'incendie n'est pas inférieure à la première probabilité.

6. Alarme incendie selon la revendication 4, dans laquelle :
le contrôleur (1) est configuré de manière à, jusqu'à la réception du signal de notification préalable (S3) par l'intermédiaire du récepteur, faire fonctionner le récepteur de façon intermittente en activant le récepteur à des intervalles de réception intermittents ; et
le contrôleur est configuré de manière à, suite à la réception du signal préliminaire d'incendie (S2) en provenance du capteur d'incendie, commencer à envoyer le signal de notification préalable (S3) par l'intermédiaire de l'émetteur à un instant de fin de l'intervalle de réception intermittent actuel.

7. Alarme incendie selon la revendication 6, dans laquelle :
le contrôleur est configuré de manière à, lorsqu'il a été déterminé que le signal sans fil reçu par l'intermédiaire du récepteur est un signal de synchronisation (S1), sélectionner un instant (T12), après l'expiration d'une période d'attente prédéterminée (Tw) à partir d'un instant de synchronisation (T11) donné par le signal de synchronisation (S1), en tant qu'un instant de début pour l'intervalle de réception intermittent successif (Tx).

8. Alarme incendie selon la revendication 1, dans laquelle :
le contrôleur est configuré de manière à faire fonctionner le récepteur en continu tout au long de la période d'attente de coopération (W).

9. Alarme incendie selon la revendication 1, dans laquelle :
le contrôleur est configuré de manière à faire fonctionner le récepteur par intermittence, en activant le récepteur à des intervalles plus courts que les intervalles de réception intermittents tout au long de la période d'attente de coopération (W).

10. Alarme incendie selon la revendication 1, dans laquelle :
le contrôleur est configuré de manière à sélectionner, en tant qu'un instant de début (T14) de la période d'attente de coopération (W), un instant antérieur à l'instant d'envoi (T15) ; ou
le contrôleur est configuré de manière à sélectionner, en tant qu'un instant de début de la période d'attente de coopération, le même instant que l'instant d'envoi.

11. Alarme incendie selon la revendication 4, dans laquelle :
le contrôleur est configuré de manière à ne pas envoyer de signal sans fil par l'intermédiaire de l'émetteur à l'instant d'envoi (T15).

12. Alarme incendie selon la revendication 4, dans laquelle :
le contrôleur est configuré de manière à, jusqu'à la réception du signal de notification préalable (S3) par l'intermédiaire du récepteur, faire fonctionner le récepteur par intermittence en activant le récepteur à des premiers intervalles de réception intermittents ;
le contrôleur est configuré de manière à sélectionner, en tant qu'une première période d'attente (Tw1), l'une parmi une pluralité de périodes d'attente différentes les unes des autres ;
le contrôleur est configuré de manière à, lorsqu'il est déterminé que le signal sans fil reçu par l'intermédiaire du récepteur est un signal de synchronisation (S1), sélectionner, en tant qu'un instant de début du premier intervalle de réception intermittent successif (Tx), un instant après l'expiration de la première période d'attente (Tw1) à partir d'un instant de synchronisation (T31) donné par le signal de synchronisation (S1), et à sélectionner, en tant qu'un instant de début d'un second intervalle de réception intermittent successif, un instant après l'expiration d'une seconde période d'attente parmi les périodes d'attente restantes à partir de l'instant de synchronisation ; et
le contrôleur est configuré de manière à, suite à la réception du signal préliminaire d'incendie en provenance du capteur d'incendie, commencer à envoyer le signal de notification préalable, par l'intermédiaire de l'émetteur, à chacun parmi un instant de fin du premier intervalle de réception intermittent actuel et un instant de fin du second intervalle de réception intermittent actuel.

13. Système d'alarme incendie, comprenant une pluralité d'alarmes incendie selon l'une quelconque des revendications 4 à 12.

14. Système d'alarme incendie selon la revendication 13, dans lequel :
la pluralité d'alarmes incendie inclut une première alarme incendie et une pluralité de secondes alarmes incendie ;
le contrôleur de la première alarme incendie est configuré de manière à, suite à la réception du signal de notification préalable par l'intermédiaire du récepteur, envoyer une balise de synchronisation (S7) par l'intermédiaire de l'émetteur, à des intervalles prédéterminés ;
la balise de synchronisation est un signal sans fil destiné à définir une pluralité de tranches de temps qui sont respectivement affectées à la pluralité de secondes alarmes incendie ; et
chacun des contrôleurs des secondes alarmes incendie respectives est configuré de manière à, suite à la réception de la balise de synchronisation par l'intermédiaire du récepteur, envoyer le signal d'avertissement par l'intermédiaire de l'émetteur au cours d'une période déterminée par la tranche de temps affectée à la seconde alarme incendie correspondante, et à faire fonctionner le récepteur tout au long d'une période déterminée par la tranche de temps non affectée à la seconde alarme incendie correspondante.

15. Système d'alarme incendie selon la revendication 13, dans lequel :
chaque contrôleur est configuré de manière à, suite à la réception du signal d'avertissement par l'intermédiaire du récepteur, envoyer le signal d'avertissement reçu, par l'intermédiaire de l'émetteur, au cours d'une période de réception où le récepteur d'une autre alarme incendie est en fonctionnement ; et
chaque contrôleur est configuré de manière à, suite à la réception du signal conclusif d'incendie en provenance du capteur d'incendie, envoyer le signal d'avertissement, par l'intermédiaire de l'émetteur, avant la période de réception.
